# EUROPÄISCHE PATENTSCHRIFT

(11) **EP 1 935 686 B1**
(45) Veröffentlichungstag und Bekanntmachung des Hinweises auf die Patenterteilung: **11.01.2012**
(21) Anmeldenummer: 07022909.1
(22) Anmeldetag: 27.11.2007
(51) Int. Cl.: B60J 1/18, B60J 5/10

(54) **Kraftfahrzeug mit einer Heckklappe und einer aufschwenkbaren Heckscheibe**
Vehicle with a rear lid and a swiveling rear window pane
Véhicule avec un hayon et une lunette arrière pivotante

(30) Priorität: 21.12.2006 DE 102006061835
(43) Veröffentlichungstag der Anmeldung: 25.06.2008
(73) Patentinhaber: Wilhelm Karmann GmbH, 49084 Osnabrück (DE)
(72) Erfinder: Tobergte, Thomas, 49170 Hagen a.T.W. (DE); Grave, Markus, 49536 Lienen (DE)
(74) Vertreter: Kronthaler, Schmidt & Coll.

(56) Entgegenhaltungen:
- EP-A- 0 979 746
- EP-A- 1 134 104
- DE-A1- 10 345 123
- DE-A1- 10 345 276
- DE-A1- 19 615 540
- FR-A- 2 862 039
- US-A1- 2006 255 619

## Beschreibung

Die Erfindung betrifft ein Kraftfahrzeug mit einem heckseitigen Deckelteil zur zumindest teilweisen Abdeckung eines Gepäckraums und mit einer im hinteren Teil des Daches angeordneten Heckscheibe nach dem Oberbegriff des Anspruchs 1, wie aus US-2006/0255619 A1 bekannt.

Aus der DE 20 2004 018 877 U1 ist ein Fahrzeug bekannt, bei dem eine Heckscheibe eines festen Daches nach Lösung seines geschlossenen Zustands zunächst separat aufschwenken kann und bei Öffnung der oben angeschlagenen und auf derselben Achse schwenkbaren Heckklappe, in die sie eingebettet ist, durch Kraftbeaufschlagung der Hecklappe über einen weiteren Schwenkweg mitgenommen werden kann. Die Heckscheibe liegt jedoch außen auf, was für eine einheitliche Optik unerwünscht ist. Zudem sind durch die gemeinsame Schwenkachse von Heckklappe und Heckscheibe die Gestaltungsmöglichkeiten für diese begrenzt.

Aus der Praxis sind Cabriolet-Fahrzeuge mit einer heckseitigen Heckklappe bekannt, mittels welcher ein Gepäckraum zumindest teilweise abdeckbar ist. Die Heckklappe weist eine in einem hinteren Teil eines beweglichen Daches angeordnete Heckscheibe auf, welche mitsamt dem Dach in eine abgelegte Position überführbar ist.

Der Erfindung liegt das Problem zugrunde, ein Cabriolet-Fahrzeug zu schaffen, bei dem eine sehr große Ladeöffnung auf einfache Weise erzielbar ist.

Die Erfindung löst dieses Problem durch ein als Cabriolet-Fahrzeug ausgebildetes Kraftfahrzeug mit den Merkmalen des Anspruchs 1. Vorteilhafte Ausgestaltungen und Weiterbildungen der Erfindung sind in den weiteren Ansprüchen 2 bis 12 angegeben.

Mit der Erfindung ist in der Ausbildung nach Anspruch 1 eine Vergrößerung der Ladeöffnung für Gepäck bei einem Cabriolet-Fahrzeug mit absenkbarem Dach erreicht. Gleichzeitig ist es nicht erforderlich, Heckklappe und Heckscheibe separat zu bewegen, sondern durch das automatische Aufschwenken der Heckscheibe reicht es, nur die Heckklappe zu bewegen, ohne sich um die Bewegung der Heckscheibe kümmern zu müssen. Trotz der beim Cabriolet-Fahrzeug erforderlichen Trennung von dem die Heckscheibe tragenden Dach und der damit verbundenen Unmöglichkeit einer über die Heckscheibe nach oben hinausreichenden Heckklappe ist es daher ermöglicht, eine Ladeöffnung zu schaffen, die von der oberen Anlenkung der Heckscheibe bis zur Unterkante der Heckklappe, also bis an oder in die Stoßstange, reicht.

Die Wahlmöglichkeit, dass entweder nur die Heckklappe mit fest stehender Scheibe oder die Heckklappe mit dabei automatischer Öffnung der Heckscheibe geöffnet werden kann, erlaubt auch in der Bedienung ein hohes Maß an Flexibilität.

Sofern das Deckelteil in Doppelfunktion sowohl einen Aufnahmeraum für das geöffnete Dach als auch einen Gepäckraum zumindest teilweise überdeckt und sowohl zur Freigabe einer Durchtrittsöffnung für das Dach in den oder aus seinem Aufnahmeraum als auch zur Freigabe einer Ladeöffnung für Gepäck im gleichen Bewegungssinn aufbeweglich ist, kann an dem erfindungsgemäßen Cabriolet-Fahrzeug auch ein sehr kurzes Heck, insbesondere auch ein Steilheck, ausgebildet sein. Ein erfindungsgemäßes Fahrzeug kann dann auch als Klein- oder Kompaktwagen, SUV, Van oder Kombi gestaltet sein.

Insbesondere kann damit bei einem Cabriolet-Fahrzeug ein Öffnungsmodus für die Heckklappe geschaffen sein, bei dem diese zur Freigabe einer Durchtrittsöffnung für das Dach in seinen Aufnahmeraum öffnet und dabei die Heckscheibe im Dach verbleibt und mit diesem gemeinsam abgelegt werden kann.

Auch bei einem geschlossenen Fahrzeugaufbau kann eine solche Gestaltung sinnvoll sein, um kleine Gepäckstücke ohne großes Heben laden oder entladen zu können oder kleineren Haustieren einen schnellen Zugang zu ermöglichen.

Wenn die aufschwenkbare Heckscheibe im Öffnungssinn vorgespannt ist, sind separate Antriebsorgane für deren Öffnungsbewegung entbehrlich. Durch eine Hemmung der Bewegung im Öffnungssinn von einem übergreifenden Abschnitt der Heckklappe je nach dessen Öffnungsstellung ist zudem ein separates Schloss oder dergleichen Sicherungsmechanismus für die Heckscheibe entbehrlich. Beim Schließen der Heckklappe kann diese automatisch gegen die Kraft der sie beaufschlagenden Antriebsorgane nach unten hin mitgenommen und durch die geschlossene Heckklappe zwangsweise auch in ihrer geschlossenen Stellung gehalten werden. Auch diese Merkmale sind nicht nur bei einem Cabriolet, sondern auch bei einem geschlossenen Fahrzeugaufbau realisierbar.

Besonders günstig ist die Heckscheibe im Öffnungssinn kraftbeaufschlagt, wobei die Aufbewegung zwangsweise bei geschlossener Heckklappe dadurch gehemmt ist, dass diese den unteren Rand der Heckscheibe in Schließstellung festhält, etwa indem ein dem unteren Rand zugeordneter Roll- oder Gleitkörper an der Innenseite der Heckklappe geführt ist.

Bei einer unmittelbaren oder mittelbaren Führung des unteren Heckscheibenrandes an der Heckklappe können sowohl das Aufals auch das Zuschwenken der Heckscheibe an die Bewegung der Heckklappe zwangsgekoppelt sein. Der Automatismus der Heckscheibenbewegung kann dann beim Öffnen und Schließen wirksam sein, ohne dass sich ein Benutzer weitere Gedanken hierzu machen müsste.

Die Heckklappe kann zur Freigabe einer Ladeöffnung für Gepäck nach oben aufschwenkbar sein und in dieser Stellung die Heckscheibe in ihrer aufgeschwenkten Stellung unterhalb der Heckklappe und teilweise von diesem überdeckt gehalten sein. Damit ist in einer solchen Stellung eine besonders große Ladeöffnung etwa von der Stoßstange bis zur Scharnierachse der aufgeschwenkten Heckscheibe erreicht. Zudem dienen die Heckscheibe und Heckklappe gemeinsam als Überdachung wie bei einer einteiligen und oben angelenkten Heckklappe nach Art eines Regenschutzes.

Trotzdem kann die Anlenkung der Heckklappe unterhalb einer seitliche Scheiben untergreifenden und im wesentlichen der Fahrzeuglängsrichtung folgenden Fensterbrüstungslinie gelegen sein. Diese Linie als Oberkante der Karosserie bleibt daher die vollständige Trennungslinie zwischen Dach und Karosserie.

Insbesondere kann das Fahrzeug als Steilheckfahrzeug ausgebildet sein und die Heckklappe einen im wesentlichen aufrechten und den Aufnahmeraum nach hinten abschließenden Heckblendenteil umfassen, so dass ein erfindungsgemäßes Fahrzeug auch als Klein- oder Kompaktwagen ausgebildet sein kann.

Die Heckscheibe kann selbst rahmenlos aufschwenken oder in einem mit dieser mitbeweglichen Schwenkrahmen gehalten sein. Im letztgenannten Fall kann bei geschlossenem Dach und geschlossener Heckscheibe der untere Abschluss des Schwenkrahmens von dem oberen Rand einer geschlossenen Heckklappe dichtend hintergreifbar sein. Dieser Schwenkrahmen ist dann bei geschlossener Heckklappe nicht aufschwenkbar. Wohl aber kann auch bei einer solchen Konstruktion die Heckscheibe, die von außen auf eine Dichtung des Schwenkrahmens aufpressbar ist und die mit ihrer unteren Kante etwas oberhalb des unteren Randes des Schwenkrahmens enden kann, auch in dieser Schließstellung der Heckklappe separat gegenüber dem Schwenkrahmen aufschwenkbar sein. Damit ist eine besonders flexible Handhabung ermöglicht.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: eine schematische Seitenansicht eines erfindungsgemäßen Cabriolet-Fahrzeugs in nach vorne abgebrochener Darstellung bei geschlossenem Dach und geschlossener Heckklappe sowie geschlossener Heckscheibe,
- Fig. 2: einen Längsschnitt des Heckklappen- und Heckscheibenbereichs des Fahrzeugs in Schließstellung nach Fig. 1 etwa im Bereich der Fahrzeugquermitte,
- Fig. 3: eine ähnliche Ansicht wie Fig. 2 bei Aufschwenken der Heckklappe nach oben und dabei zwangsweise im Öffnungssinn mitgeführter Heckscheibe,
- Fig. 4: eine ähnliche Ansicht wie Fig. 3 bei weiter fortschreitender Öffnung der Heckklappe und der Heckscheibe,
- Fig. 5: eine ähnliche Ansicht wie Fig. 4 bei fast vollständig geöffneter Heckklappe und Heckscheibe,
- Fig. 6: eine ähnliche Ansicht wie Fig. 5 bei vollständig geöffneter Heckklappe und Heckscheibe, die in dieser Stellung teilweise von der Heckklappe überlappt ist,

- Fig. 7: eine ähnliche Ansicht wie Fig. 2 eines weiteren Ausführungsbeispiels, bei dem eine Federkraftbeaufschlagung der Heckscheibe im Öffnungssinn entbehrlich ist und diese mit ihrem unteren Ende in einer Führungsschiene beim Öffnen und Schließen zwangsbeweglich gehalten ist,
- Fig. 8: eine ähnliche Darstellung wie Fig. 7 während der beginnenden Öffnung von Heckklappe und mitgeführter Heckscheibe bei Anschlagen einer Doppelrollenführung an einer inneren Führungsschiene,
- Fig. 9: eine ähnliche Ansicht wie Fig. 8 bei weiterer Öffnung von Heckklappe und Heckscheibe,
- Fig. 10: eine ähnliche Ansicht wie Fig. 9 bei weiterer Öffnung von Heckklappe und Heckscheibe,
- Fig. 11: eine ähnliche Ansicht wie Fig. 10 bei weiterer Öffnung von Heckklappe und Heckscheibe,
- Fig. 12: eine ähnliche Ansicht wie Fig. 11 bei vollständig geöffneter Heckklappe und Heckscheibe, die in dieser Stellung teilweise von der Heckklappe überlappt ist,
- Fig. 13: eine ähnliche Darstellung wie Fig. 7 bei Umklappen der inneren Führungsbahn nach außen, um Freigang für eine Dachbewegung im Sinne der CabrioletÖffnung zu schaffen,
- Fig. 14: eine ähnliche Darstellung wie Fig. 13 bei zur Dachöffnung mit diesem abgelegter Heckscheibe.

Das erfindungsgemäße Cabriolet-Fahrzeug 1 kann ein mit zumindest einer Rückbank versehenes vier- oder mehrsitziges Fahrzeug oder auch ein Zweisitzer sein. Die Steilheckausbildung ist sowohl im Klein- und Kompaktwagenbereich als auch etwa bei Geländewagen, Kombis oder Vans häufig anzutreffen.

Das hier insgesamt bewegliche und in geschlossener Stellung mittelbar oder unmittelbar an einen Windschutzscheibenrahmen 3 anschließende Dach 2 kann als Retractable Hardtop (RHT) mehrere an ihrer Außenfläche voneinander getrennte und mehr oder minder plattenförmig ausgebildete Baueinheiten umfassen oder als sog. Softtop mit einem gemeinsamen flexiblen Bezug überspannt sein.

In jedem Fall ist von dem insgesamt absenkbaren Dach 2 eine aufschwenkbare Heckscheibe 5 umfasst, die bei ansonsten geschlossenem Dach 2 gegenüber sie seitlich einfassenden umgebenden hinteren Randsäulen 6, die zur Cabriolet-Öffnung absenkbar sind, abheben kann.

Zudem ist in jedem Fall das Dach 2 bei seiner Öffnung abwärts verlagerbar. Zur Aufnahme des geöffneten Daches kann ein Aufnahmeraum vorgesehen sein, der zumindest teilweise von einer Heckklappe 7 abdeckbar sein kann, die dann in Doppelfunktion zur zumindest teilweisen Abdeckung des Aufnahmeraums für das Dach 2 und eines Gepäckraums wirkt, der bei geschlossenem Dach 2 den Aufnahmeraum mit umfassen kann. Insbesondere bei einem Retractable Hardtop schwenkt die Heckklappe sowohl zur Freigabe einer Durchtrittsöffnung für das Dach 2 als auch zur Freigabe einer Ladeöffnung für Gepäck auf. Beide unterschiedlichen Öffnungsbewegungen der Heckklappe 7 können dennoch gleichsinnig erfolgen, nämlich derart, dass zu jeder dieser Öffnungsarten ihr hinterer Rand nach oben und vorne angehoben wird. Dies kann im einfachsten Fall über eine Schwenkbewegung mit einem Freiheitsgrad um eine fahrzeugfeste Querachse möglich sein. Hier ist ein Viergelenk vorgesehen, so dass die Heckklappe 7 mit ihrem bei geschlossenem Dach 2 vorderen Rand in Öffnungsstellung aufwärts und gleichzeitig auch heckwärts verlagert werden kann.

Die Heckscheibe 5 ist an einem nach unten offenen und mit diesem zur Dachöffnung absenkbaren Rahmenteil 8 des Daches 2 gehalten, wobei der ein- oder mehrstückige Rahmenteil 8 fest mit den seitlich der Heckscheibe 5 gelegenen Abschnitten 6 des Daches 2 verbunden und mit diesen bei Dachöffnung in die Karosserie ablegbar ist.

Der Rahmenteil 8 umgreift im geschlossenen Zustand die Heckscheibe 5 zumindest an ihrem oberen Rand sowie seitlich und kann daher im wesentlichen U-förmig und nach unten offen ausgebildet sein.

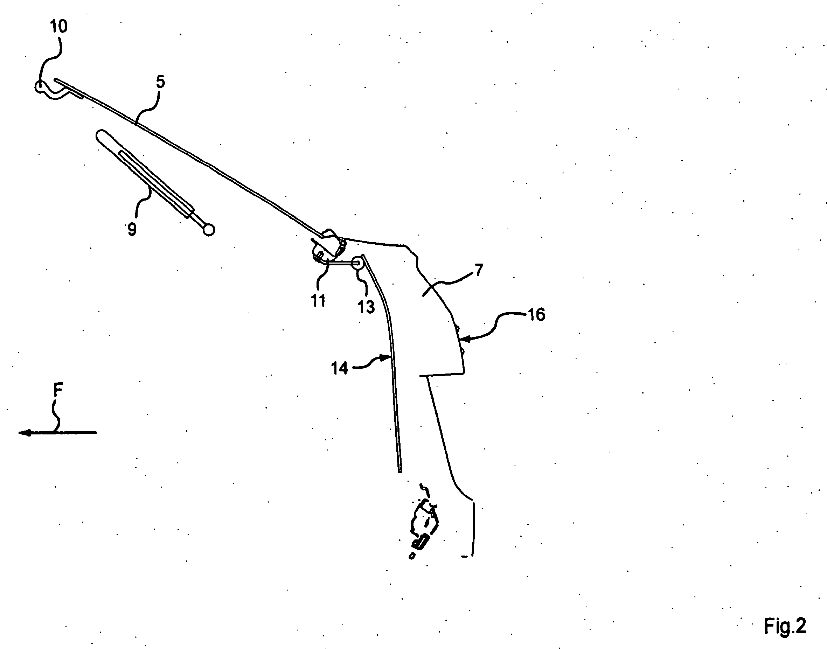

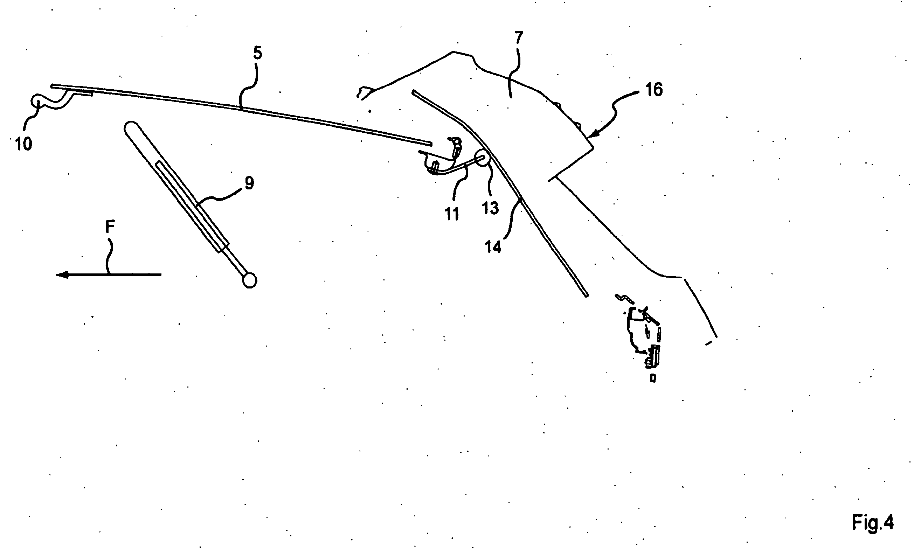

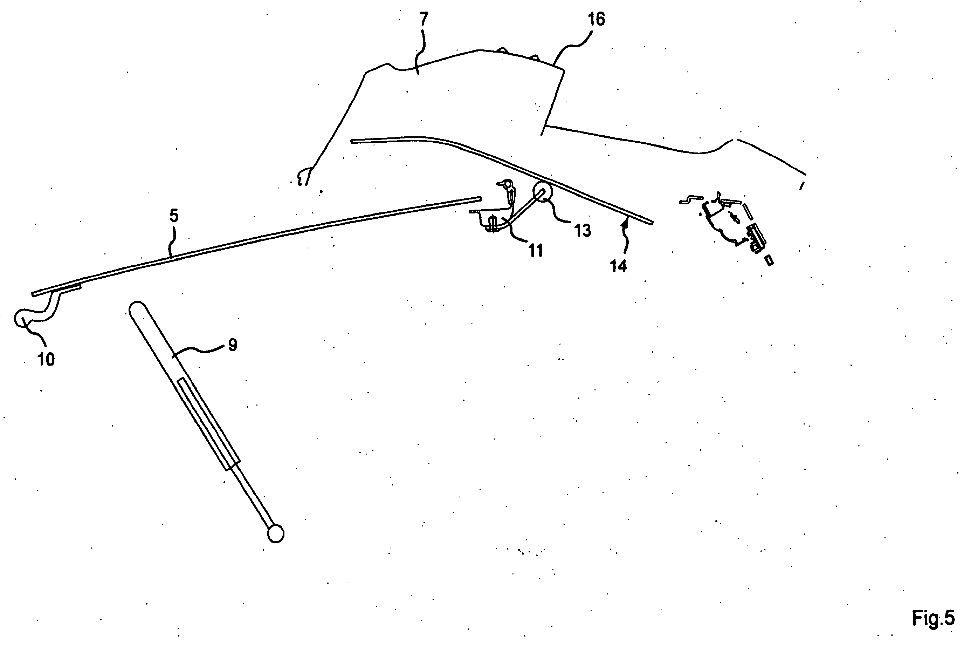

Gegenüber diesem Rahmenteil 8 kann die Heckscheibe 5 als rahmenlose Baueinheit aufschwenkbar sein, zum Beispiel mittels gegenüber dem Rahmenteil 8 wirksamen Gasdruckfedern 9. Die Schwenkscharniere 10 können dann direkt an der Heckscheibe 5 angreifen. Alternativ kann die Heckscheibe 5 auch in einem mit dieser mitbeweglichen Schwenkrahmen 11 gehalten ist, wie dies in den Figuren 2 bis 6 dargestellt ist. Hierbei sind vorteilhaft zwei unterschiedliche Öffnungsarten der Heckscheibe 5 möglich: Diese kann, wie hier dargestellt, mit dem Schwenkrahmen 11 aufgeschwenkt werden oder bei fest liegendem Schwenkrahmen 11 einzeln aufgeschwenkt werden, so dass auch bei geschlossener Heckklappe 7 ein einzelnes Öffnen der Heckscheibe 5 möglich ist (hier nicht dargestellt).

Mit der angesprochenen einzelnen Aufschwenkbarkeit der Heckscheibe 5 gegenüber dem Schwenkrahmen 11 kann in dieser gegenüber dem unteren Rand des Schwenkrahmens 11 dichtenden und haltenden Schließstellung der Heckklappe 7 dennoch die Heckscheibe 5 gegenüber dem Schwenkrahmen 11 aufschwenkbar sein, da die Heckscheibe 5 mit ihrer unteren Kante etwas oberhalb des unteren Randes des Schwenkrahmens 11 endet.

Mit zusätzlichem Aufschwenken auch der Heckklappe ergibt sich hingegen eine besonders große Ladeöffnung, die etwa von der Stoßstange bis zur oberen Dachfläche reicht. Dennoch ist hierzu keine von oben bis unten durchgehende Heckklappe nötig, sondern diese erstreckt sich in geschlossener Stellung erst ungefähr ab der horizontalen Ebene der Fensterbrüstung 12 nach unten. In dieser aufgeschwenkten Stellung von Heckscheibe 5 und Heckklappe 7 ist die Heckscheibe 5 in ihrer aufgeschwenkten Stellung unterhalb der Heckklappe 7 und teilweise von diesem überdeckt halterbar. Auch in dieser Stellung einer maximierten Ladeöffnung ist daher die Verletzungsgefahr für den Kopf minimal. Zudem bildet die doppelte Abdeckung der Ladeöffnung aus Heckklappe 7 und Heckscheibe 5 einen Wetterschutz während des Be- oder Entladens.

Bei Öffnung des gesamten Daches 2 zur Cabriolet-Öffnung kann die Heckscheibe 5 hingegen nach Art einer herkömmlichen Heckscheibe fest mit den Rahmenteilen 8 verbunden bleiben.

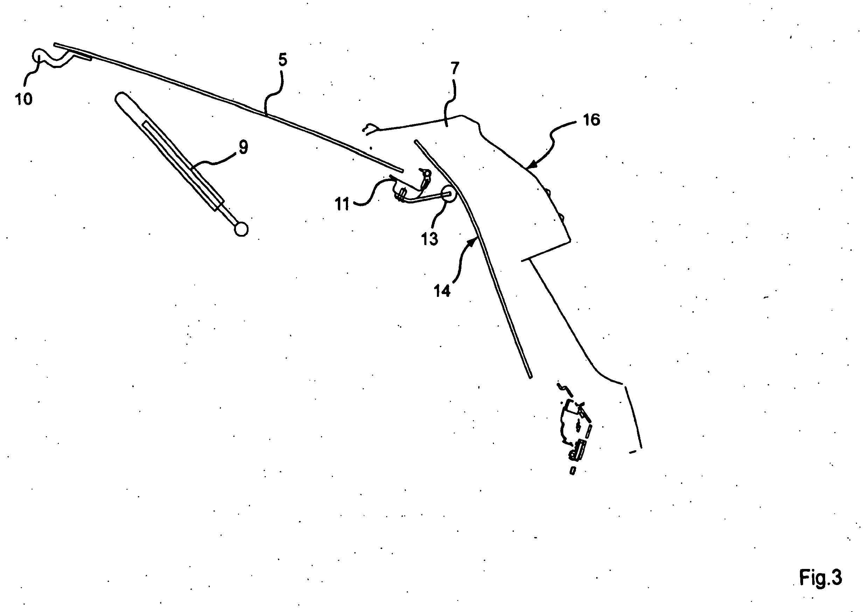

Durch das Öffnen der Heckklappe 7, das manuell oder automatisch durchführbar sein kann, ist die Heckscheibe 5 aus einer ansonsten geschlossenen Dachstellung automatisch und gekoppelt an die Heckklappenbewegung nach oben aufschwenkbar (z. B. Fig. 3 bis Fig. 6).

Dabei muss diese Kopplung nicht zwingend bei jeder Öffnung der Heckklappe 7 wirksam sein, sondern es kann möglich sein, dass die Heckscheibe 5 bei Öffnung des Deckelteils zur Freigabe einer Ladeöffnung für Gepäck wahlweise entweder automatisch nach oben aufschwenken zu lassen, oder, insbesondere beim Aufschwenken der Heckklappe 7 zur Freigabe einer Durchtrittsöffnung für das Dach 2 in seiner im Dach 2 eingebetteten Schließlage zu belassen. Hierfür können zum Beispiel zwei verschiedene Bedienknöpfe an der Heckklappe 7 oder am Armaturenbrett vorgesehen sein, mit denen die Art der Öffnung jeweils unterschieden werden kann.

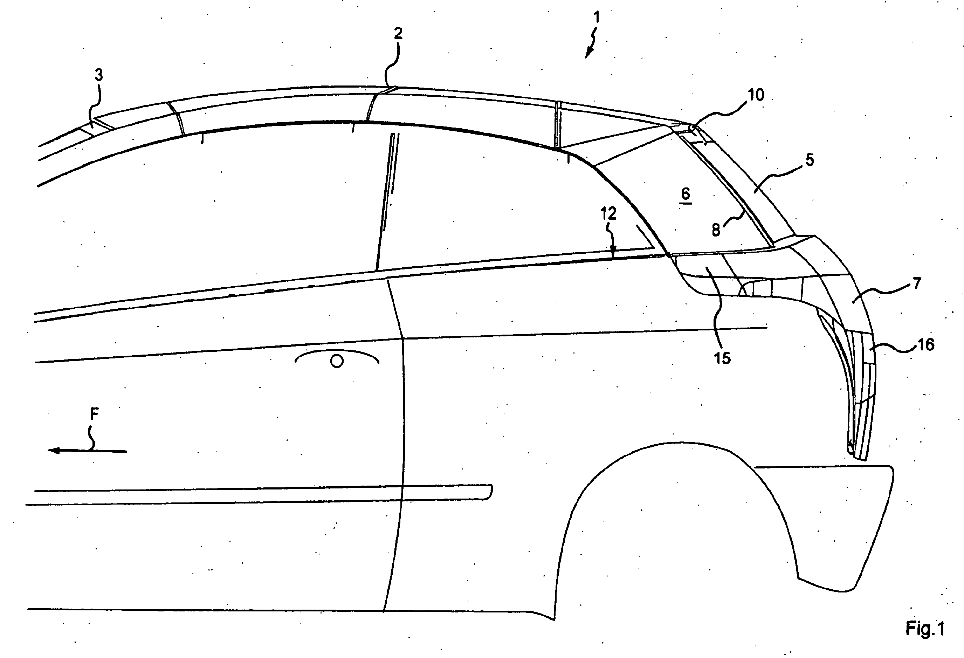

Im ersten Ausführungsbeispiel nach den Figuren 1 bis 6 ist die Heckscheibe 5 über zum Beispiel Gasdruckfedern 9, teleskopisch ausfahrbare Schienen oder andere Maßnahmen im Öffnungssinn vorgespannt. Diese Bewegung im Öffnungssinn ist jedoch von einem übergreifenden Abschnitt der Heckklappe 7 in seiner geschlossenen Stellung (Fig. 2) durch deren Übergreifen vollständig gehemmt, indem der Heckscheibe 5 an ihrem unteren Rand zumindest ein Roll- oder Gleitkörper 13, hier eine Rolle, an der Innenseite des Deckelteils geführt ist und durch die Federkraftbeaufschlagung gegen eine in der Heckklappe 7 angeordnete Führungsbahn 14 gepresst wird.

Die Anlenkung der Heckklappe 7 ist unterhalb einer seitliche Scheiben untergreifenden und im wesentlichen der Fahrzeuglängsrichtung folgenden Fensterbrüstungslinie 12 gelegen, zum Beispiel über nach vorne ragende Seitenflügel 15 der Heckklappe 7. In Draufsicht ist die Heckklappe 7 dadurch ungefähr U-förmig und weist im mittleren Bereich nur einen schmalen Quersteg im Bereich der Fensterbrüstungslinie 12 auf. Das Fahrzeug benötigt daher kein Stufenheck, sondern kann als Steilheckfahrzeug ausgebildet sein, wobei die Heckklappe 7 einen im wesentlichen aufrechten und den Aufnahmeraum nach hinten abschließenden Heckblendenteil 16 umfasst.

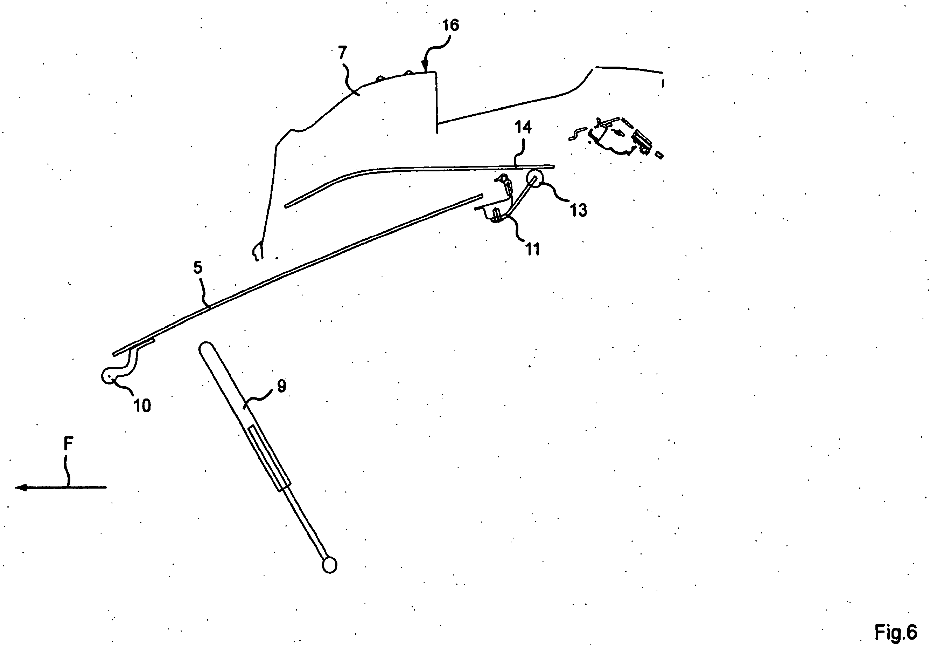

Bei Öffnung der Heckklappe 7 schwenkt mit dieser die Führungsbahn 14 nach hinten oben auf, so dass sich ein zunehmender Bewegungsraum für den Roll- oder Gleitkörper 13 ergibt. Der Gasdruckfeder 9 wird dabei ein stetig weiteres Ausschieben ermöglicht (Fig. 2 bis Fig. 6). In Offenstellung der Heckklappe 7 (Fig. 6) ist dann die Heckscheibe 5 bis zu einer über die Horizontale hinausgehenden Stellung um beispielsweise etwa 90° oder mehr aufgeschwenkt.

In dieser Stellung ist die aufgeschwenkte Heckscheibe 5 unterhalb der Heckklappe 7 und teilweise von dieser überdeckt gehalten - mit den o. g. Vorteilen. Beim Schließen der Heckklappe 7 wird der Rollkörper 13 bezüglich der Führungsbahn 14 wieder gegen die Kraft der Federn 9 nach oben verlagert und die Heckscheibe 5 somit in ihre Schließstellung gezwungen.

Da die Pressung der Heckscheibe 5 gegen die Führungsbahn 14 in diesem Ausführungsbeispiel nur über Federkraft bewirkt ist, kann die Scheibe 5 auch gegen diese Federkraft gesichert werden, etwa durch ein zusätzliches Schloss zu ihrem Halten in der geschlossenen Position.

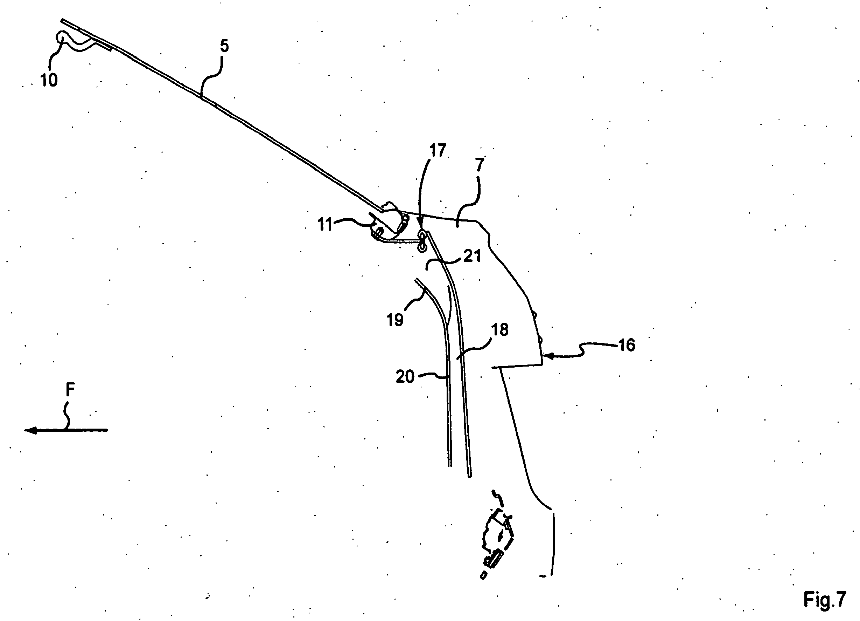

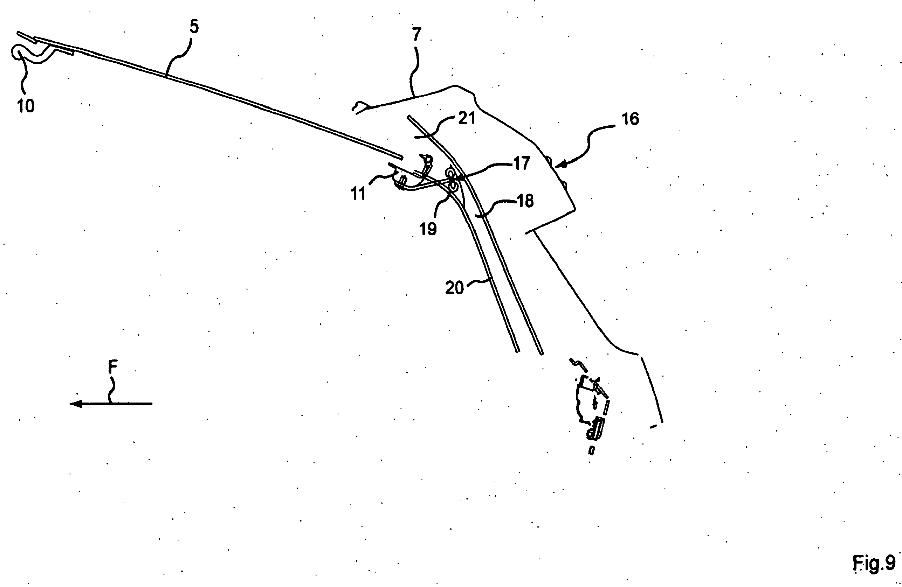

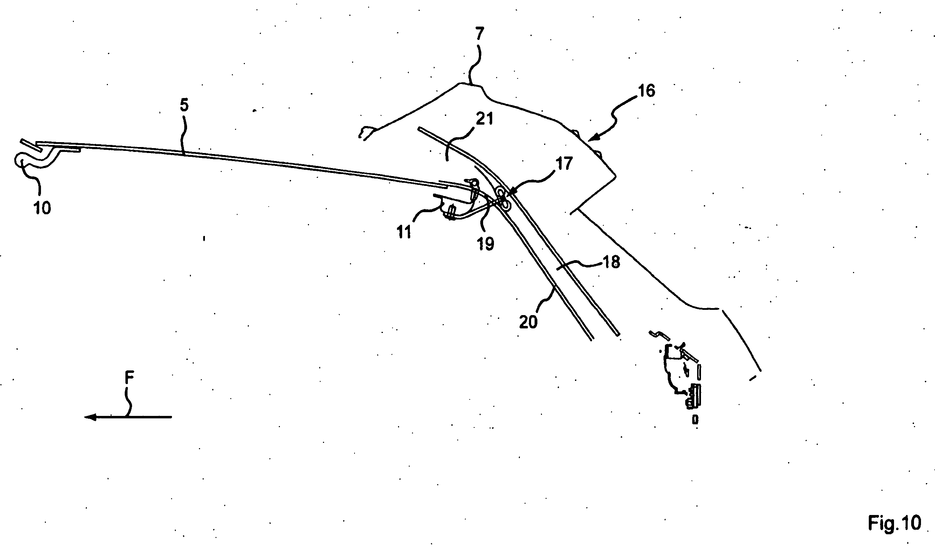

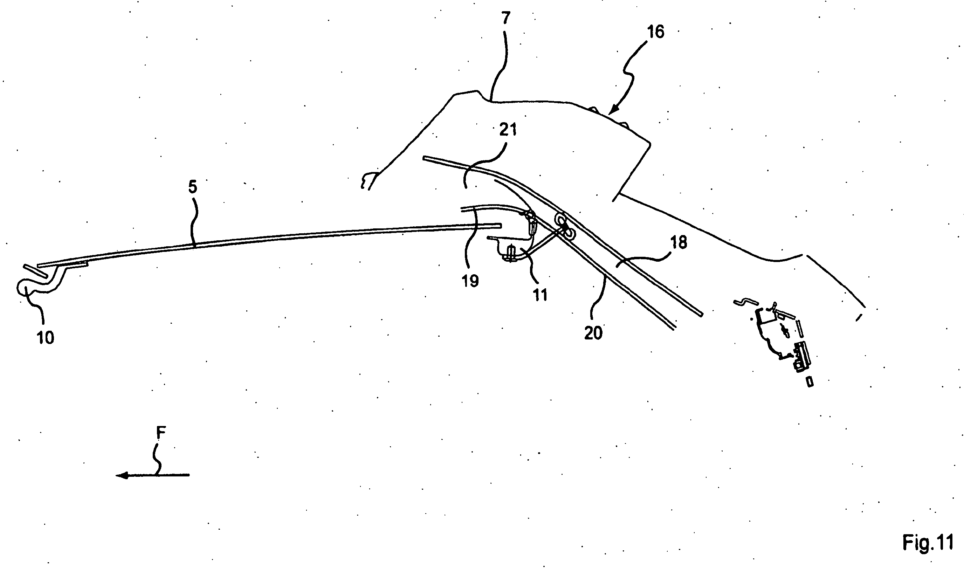

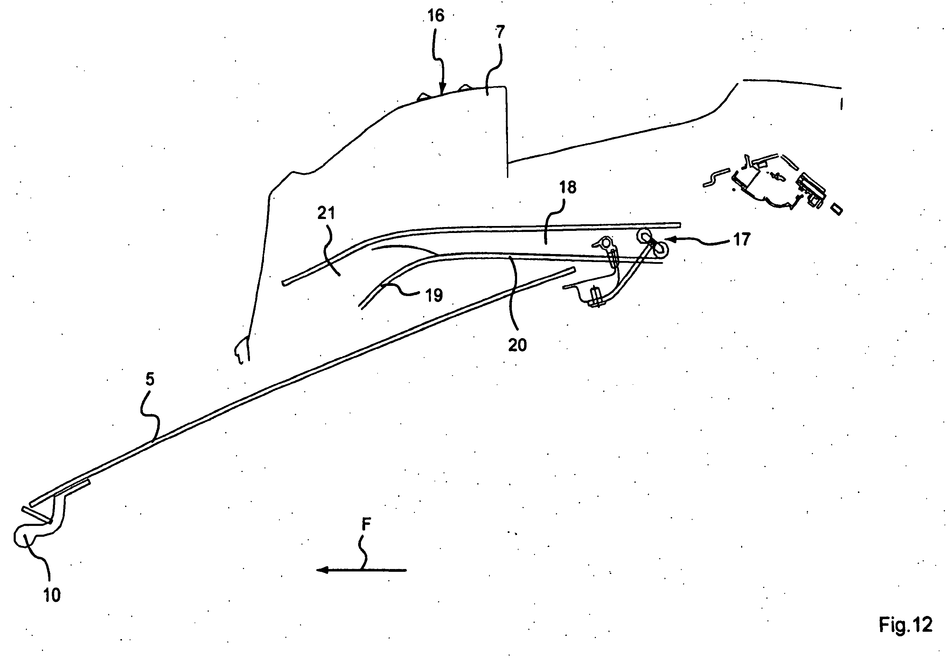

Im zweiten Ausführungsbeispiel nach den Figuren 7 bis 14 ist hingegen das Auf- und Zuschwenken der Heckscheibe 5 an die Bewegung der Heckklappe 7 derart zwangsgekoppelt, dass dort eine Doppelrolle 17 der Heckscheibe 7 innerhalb einer nach innen und außen geschlossenen Führungsbahn 18 der Heckklappe 7 beweglich ist.

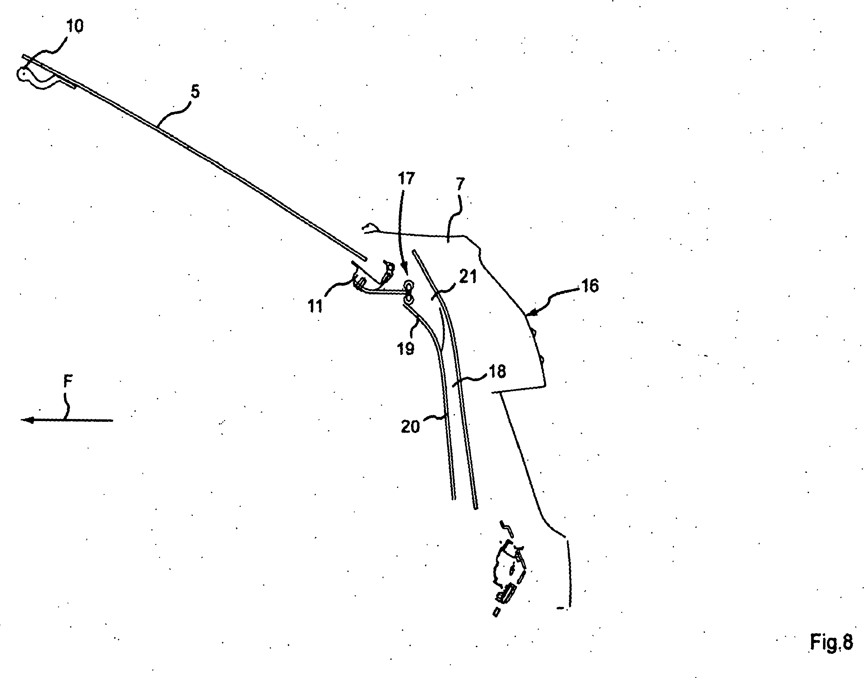

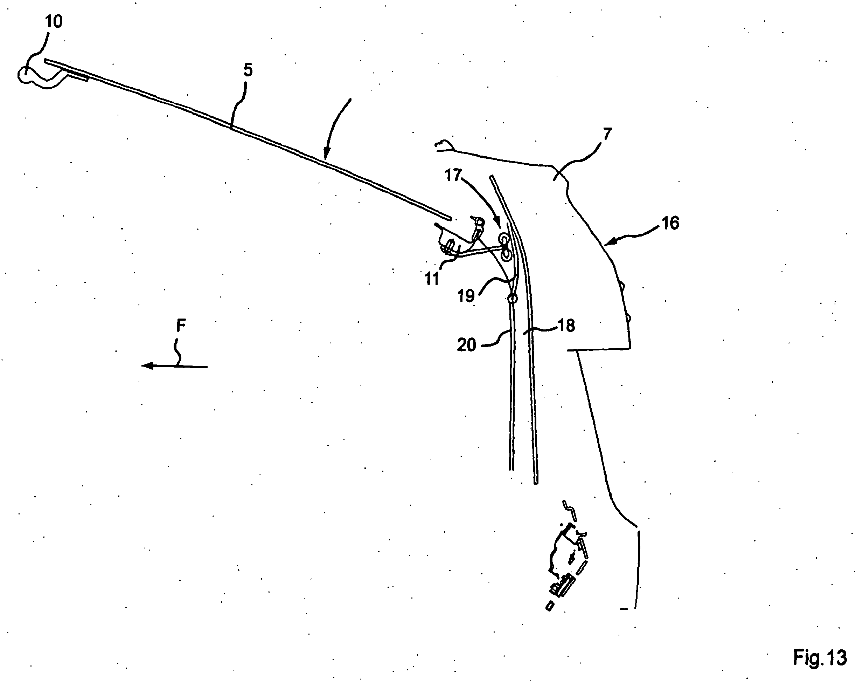

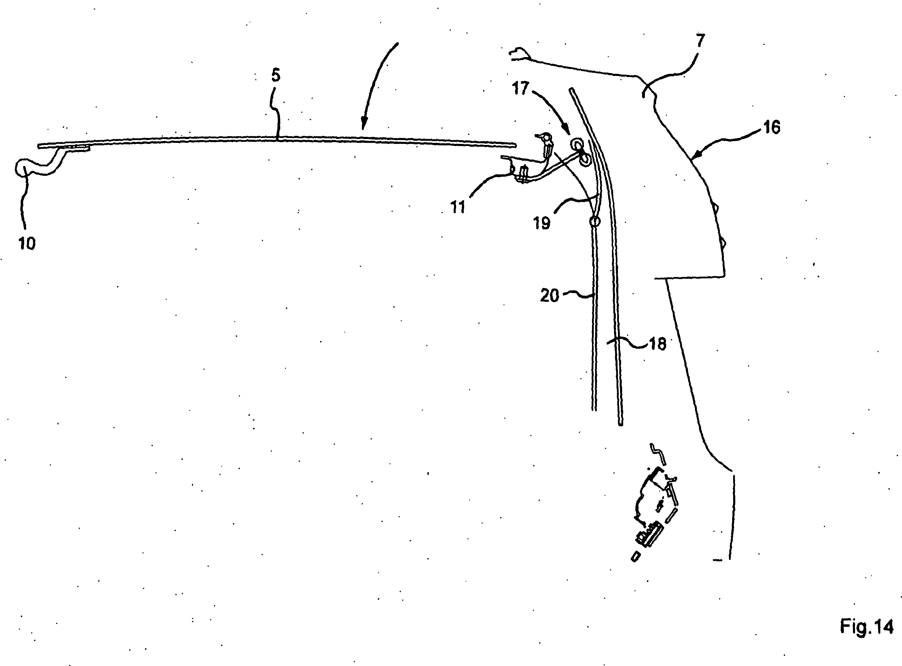

Der Öffnungsablauf der Heckklappe 7 unter Mitnahme der Heckscheibe 5 ist in den Figuren 7 bis 12 dargestellt. Die Figuren 13 und 14 zeigen hingegen den Ablauf der Cabriolet-Dachöffnung bei in dessen Seitenbereich 6 eingebetteter Heckscheibe 5. Für diesen Ablauf ist ein oberer Teil 19 der inneren (vorderen) Führungsschiene 20 nach Art einer Weiche verschwenkbar. Dieses Umschwenken ist in der geschlossenen Stellung von Heckklappe 7 und Heckscheibe 5 nach Fig. 7, in der sich die Doppelrolle 17 in einer erweiterten Trichteröffnung 21 der Führungsbahn 18 befindet und noch keinen Kontakt zur inneren Führungsschiene 20 hat, ermöglicht. Bleibt der Teil 19 in der einwärts führenden Stellung nach Fig. 7, läuft beim Öffnen der Heckklappe 7 nach Durchlaufen eines kleinen Öffnungswinkels der Heckklappe 7, von zum Beispiel bis 8° (Fig. 8), automatisch und zwangsweise die Doppelrolle 17 in die Führungsbahn 18 hinein. Eine Feder- oder sonstige Kraftbeaufschlagung der Heckscheibe 5 ist dabei nicht nötig, da die Doppelrolle 17 in der Bahn 18 dann gefangen und zwangsweise bei weiterem Aufschwenken der Heckklappe 7 an diese gebunden, wie im Ablauf nach Fig. 8 bis Fig. 12 erkennbar ist. Die Relativlage von Heckscheibe 5 zur Heckklappe 7 kann während dieses Ablaufs nahezu dem des ersten Ausführungsbeispiels entsprechen.

Zur Öffnung des Daches 2 im Cabriolet-Sinn ist hingegen die Heckscheibe in ihrer Einbettung in das Dach 2 nach vorne unten in eine ungefähr horzizontale Lage schwenkbar (Fig. 14), was nach vorherigem Umstellen des oberen Abschnitts 19 der innern Führungsschiene 20 möglich ist. Im ersten Ausführungsbeispiel war aufgrund der Möglichkeit, die Rolle 13 von der Führungsbahn 14 nach innen abzuheben, ein solches Umstellen nicht erforderlich.

Auch andere Kopplungsmöglichkeiten als die gezeigten sind zwischen Heckklappe 7 und Heckscheibe 5 möglich.

Die Erfindung eröffnet weiter die Möglichkeit trotz der Gleichsinnigkeit der Bewegungen die Heckklappe 7 bei Freigabe der Durchtrittsöffnung für das Dach 2 in eine weniger weit geöffnete erste Offenstellung und bei Freigabe der Ladeöffnung für Gepäck in eine zweite, weiter auf bewegte.Offenstellung zu bewegen. Damit kann beim Beladen eine hohe Kopffreiheit erreicht werden. Bei der Dachöffnung ist jedoch nicht die Gefahr, an einer Garagendecke anzuschlagen, deutlich vermindert.

## Patentansprüche

1. Als Cabriolet-Fahrzeug ausgebildetes Kraftfahrzeug (1) mit einer heckseitigen Heckklappe (7) zur zumindest teilweisen Abdeckung eines Gepäckraums und mit einer im hinteren Teil des beweglichen Daches (2) angeordneten Heckscheibe (5), wobei das Dach (2) insgesamt mit der von ihm umfassten Heckscheibe (5) absenkbar ist,
**dadurch gekennzeichnet,**
**dass** die Heckscheibe (5) in einer ansonsten geschlossenen Dachstellung bei Öffnung der Heckklappe (7) zur Freigabe einer Ladeöffnung für Gepäck automatisch nach oben aufschwenkbar ist.

2. Cabriolet-Fahrzeug (1) nach Anspruch 1,
**dadurch gekennzeichnet,**
**dass** die Heckklappe (7) in Doppelfunktion sowohl einen Aufnahmeraum für das geöffnete Dach (2) als auch einen Gepäckraum zumindest teilweise überdeckt und sowohl zur Freigabe einer Durchtrittsöffnung für das Dach (2) in den oder aus dem Aufnahmeraum als auch zur Freigabe der Ladeöffnung für Gepäck im gleichen Bewegungssinn aufbeweglich ist.

3. Cabriolet-Fahrzeug (1) nach Anspruch 2
**dadurch gekennzeichnet,**
**dass** die Heckscheibe (5) zur Freigabe der Durchtrittsöffnung für das Dach (2) in den Aufnahmeraum in seiner im Dach (2) eingebetteten Schließlage verbleibt.

4. Cabriolet-Fahrzeug (1) nach einem der Ansprüche 1 bis 3,
**dadurch gekennzeichnet,**
**dass** die aufschwenkbare Heckscheibe (5) im Öffnungssinn vorgespannt (9) ist und die Bewegung im Öffnungssinn von einem übergreifenden Abschnitt der Heckklappe (7) je nach deren Öffnungsstellung mehr oder weniger gehemmt ist.

5. Cabriolet-Fahrzeug (1) nach Anspruch 4,
**dadurch gekennzeichnet,**
**dass** die Heckscheibe (5) über an einem dachseitigen Rahmen abgestützte Federelemente (9) im Öffnungssinn kraftbeaufschlagt ist und mit zumindest einem ihrem unteren Rand zugeordneten Roll- oder Gleitkörper (13) an der Innenseite der Heckklappe (7) geführt (14) ist.

6. Cabriolet-Fahrzeug (1) nach einem der Ansprüche 1 bis 5,
**dadurch gekennzeichnet,**
**dass** das Auf- und Zuschwenken der Heckscheibe (5) an die Bewegung der Heckklappe (7) zwangsgekoppelt ist.

7. Cabriolet-Fahrzeug (1) nach einem der Ansprüche 1 bis 6,
**dadurch gekennzeichnet,**
**dass** bei zur Freigabe einer ladeöffnung für Gepäck nach oben aufgeschwenkter Heckklappe (7) die aufgeschwenkte Heckscheibe (5) unterhalb der Heckklappe (7) und teilweise von dieser überdeckt ist, wobei insbesondere die Heckscheibe (5) von der Heckklappe (7) halterbar ist.

8. Cabriolet-Fahrzeug nach Anspruch 7,
**dadurch gekennzeichnet,**
**dass** die Anlenkung der Heckklappe (7) unterhalb einer seitliche Scheiben untergreifenden und im wesentlichen der Fahrzeuglängsrichtung folgenden Fensterbrüstungslinie (12) gelegen ist.

9. Cabriolet-Fahrzeug nach einem der Ansprüche 1 bis 8,
**dadurch gekennzeichnet,**
**dass** das Fahrzeug 1) als Steilheckfahrzeug ausgebildet ist und die Heckklappe (7) einen im wesentlichen aufrechten und den Aufnahmeraum nach hinten abschließenden Heckblendenteil (16) umfasst.

10. Cabriolet-Fahrzeug (1) nach Anspruch 9,
**dadurch gekennzeichnet,**
**dass** an den Heckblendenbereich (16) der Heckklappe (7) nach vorne erstreckte Seitenflügel (15) anschließen, die zwischen sich einen schmalen Verbindungssteg umfassen, so dass die Heckklappe (7) in Draufsicht U-förmig ist.

11. Cabriolet-Fahrzeug (1) nach einem der Ansprüche 1 bis 10,
**dadurch gekennzeichnet,**
**dass** in Schließstellung der Heckklappe (7) die Heckscheibe (5) gegenüber einem mit dieser beweglichen Schwenkrahmen (11) aufschwenkbar ist.

12. Cabriolet-Fahrzeug nach einem der Ansprüche 2 bis 11,
**dadurch gekennzeichnet,**
**dass** trotz der Gleichsinnigkeit der Bewegungen die Heckklappe (7) bei Freigabe der Durchtrittsöffnung für das Dach (2) in einer weniger weit geöffneten ersten Offenstellung und bei Freigabe der Ladeöffnung für Gepäck in einer zweiten, weiter auf bewegten Offenstellung steht.

## Claims

1. A motor vehicle (1) provided as a convertible vehicle, comprising a rear tailgate (7) for at least partly covering a luggage compartment and further comprising a rear window (5) arranged in the rear part of the movable roof (2), which roof (2) can be lowered as a whole together with the rear window (5) it encompasses,
**characterised in that**
the rear window (5) can be automatically swung open upwards in an otherwise closed roof position when opening the tailgate (7) to expose a loading opening for luggage.

2. The convertible vehicle (1) according to claim 1, **characterised in that** the tailgate (7) serves the double function of at least partly covering a stowage compartment for the opened roof (2) and a luggage compartment and can be opened in the same direction of movement both to expose a passage opening for the roof (2) into or out of the stowage compartment and to expose the loading opening for luggage.

3. The convertible vehicle (1) according to claim 2, **characterised in that** the rear window (5) remains in its closed position embedded in the roof (2) in order to expose the passage opening for the roof (2) into the stowage compartment.

4. The convertible vehicle (1) according to any one of claims 1 to 3, **characterised in that** the rear window (5), which can be swung open, is pre-tensioned (9) in the opening direction and the movement in the opening direction is inhibited to a greater or lesser degree, depending on the opening position of the tailgate (7), by an overlapping portion of the tailgate (7).

5. The convertible vehicle (1) according to claim 4, **characterised in that** the rear window (5) is subjected to a force in the opening direction by spring elements (9) supported on a roof-side frame and is guided (14) along the inside of the tailgate (7) by at least one rolling or sliding body (13) associated with the lower edge of the rear window (5).

6. The convertible vehicle (1) according to any one of claims 1 to 5, **characterised in that** the pivoting movement for opening and closing the rear window (5) is forcibly coupled with the movement of the tailgate (7).

7. The convertible vehicle (1) according to any one of claims 1 to 6, **characterised in that**, when the tailgate (7) is swung open upwards to expose a loading opening for luggage, the rear window (5), when swung open, is situated below the tailgate (7) and partly covered by the latter and is, in particular, supportable by the tailgate (7).

8. The convertible vehicle according to claim 7, **characterised in that** the hinge connection of the tailgate (7) is located below a window-sill line (12) extending under side windows and substantially following the longitudinal direction of the vehicle.

9. The convertible vehicle according to any one of claims 1 to 8, **characterised in that** the vehicle (1) is provided as a hatchback vehicle and the tailgate (7) comprises a substantially upright rear panel (16) which forms the rear end of the stowage compartment.

10. The convertible vehicle (1) according to claim 9, **characterised in that** forwardly extending lateral wings (15), encompassing a narrow connecting ridge between them, adjoin the rear panel area (16) of the tailgate (7) so that the tailgate (7) is U-shaped when viewed from above.

11. The convertible vehicle (1) according to any one of claims 1 to 10, **characterised in that**, in the closed position of the tailgate (7), the rear window (5) can be swung open with respect to a pivoting frame (11) which can be moved together with the rear window (5).

12. The convertible vehicle according to any one of claims 2 to 11, **characterised in that**, in spite of the movements following the same direction, the tailgate (7) is in a less open, first opening position when releasing the passage opening for the roof (2) and in a further open, second opening position when releasing the loading opening for luggage.

## Revendications

1. Véhicule automobile (1) réalisé sous forme d'un véhicule cabriolet, comprenant un hayon arrière (7) destiné à recouvrir au moins partiellement un coffre à bagages et comprenant en outre une lunette arrière (5) disposée à l'arrière du toit déplaçable (2), ledit toit (2) pouvant être abaissé ensemble avec ladite lunette arrière (5) qu'il comprend,
**caractérisé en ce que**
la lunette arrière (5), dans une position autrement fermée du toit, peut être ouvert par pivotement automatique vers le haut lors de l'ouverture dudit hayon (7) pour libérer une ouverture de chargement de bagages.

2. Véhicule cabriolet (1) selon la revendication 1, **caractérisé en ce que** l'hayon (7) sert une double fonction de couverture, au moins partielle, d'un compartiment de rangement pour le toit ouvert (2) et d'un coffre à bagages et peut être ouvert dans le même sens de déplacement soit pour libérer une ouverture de passage pour le toit (2) vers l'intérieur ou l'extérieur du compartiment de rangement, soit pour libérer l'ouverture de chargement de bagages.

3. Véhicule cabriolet (1) selon la revendication 2, **caractérisé en ce que** la lunette arrière (5) reste dans sa position de fermeture, encastrée dans le toit (2), afin de libérer l'ouverture de passage du toit (2) vers l'intérieur du compartiment de rangement.

4. Véhicule cabriolet (1) selon l'une quelconque des revendications 1 à 3, **caractérisé en ce que** la lunette arrière (5), qui peut être ouverte par pivotement, est précontrainte (9) dans le sens d'ouverture, et le déplacement dans le sens d'ouverture est bloqué de manière plus ou moins complète, en fonction de la position d'ouverture de l'hayon (7), par une section recouvrant de l'hayon (7).

5. Véhicule cabriolet (1) selon la revendication 4, **caractérisé en ce qu'**une force est exercée sur la lunette arrière (5) dans le sens d'ouverture par des éléments de ressort (9) prenant appui sur un cadre du côté du toit et **en ce que** ladite lunette arrière (5) est guidée (14) à l'intérieur de l'hayon (7) par au moins un corps de roulement ou de glissement (13) associé au bord inférieur de ladite lunette arrière (5).

6. Véhicule cabriolet (1) selon l'une quelconque des revendications 1 à 5, **caractérisé en ce que** le pivotement d'ouverture ou de fermeture de la lunette arrière (5) est couplé en force avec le déplacement de l'hayon (7).

7. Véhicule cabriolet (1) selon l'une quelconque des revendications 1 à 6, **caractérisé en ce que**, lors de l'ouverture de l'hayon (7) par pivotement vers le haut afin de libérer une ouverture de chargement de bagages, la lunette arrière (5), ouverte par pivotement, est située au-dessous de l'hayon (7) et partiellement recouverte par ce dernier, la lunette arrière (5) pouvant prendre appui notamment sur l'hayon (7).

8. Véhicule cabriolet selon la revendication 7, **caractérisé en ce que** l'articulation de l'hayon (7) est située au-dessous d'une ligne de parapet de fenêtre (12) s'étendant sous des fenêtres latérales et suivant sensiblement la direction longitudinale du véhicule.

9. Véhicule cabriolet selon l'une quelconque des revendications 1 à 8, **caractérisé en ce que** ledit véhicule (1) est réalisé sous forme d'un véhicule à hayon arrière dont l'hayon (7) comprend un panneau arrière (16) sensiblement debout qui constitue l'extrémité arrière du compartiment de rangement.

10. Véhicule cabriolet (1) selon la revendication 9, **caractérisé en ce que** des ailes latérales (15), qui s'étendent vers l'avant et comprennent entre eux une âme de connexion, sont contiguës au panneau arrière (16) de l'hayon (7), de sorte que l'hayon (7) forme un U en vue de dessus.

11. Véhicule cabriolet (1) selon l'une quelconque des revendications 1 à 10, **caractérisé en ce que**, dans la position fermée de l'hayon (7), la lunette arrière (5) peut être ouverte par pivotement par rapport à un cadre pivotant (11) qui est déplaçable ensemble avec la lunette arrière (5).

12. Véhicule cabriolet selon l'une quelconque des revendications 2 à 11, **caractérisé en ce que** malgré le sens identique des déplacements, l'hayon (7) se trouve dans une première position d'ouverture moins ouverte lors de la libération de l'ouverture de passage du toit (2) et dans une deuxième position d'ouverture plus ouverte lors de la libération de l'ouverture de chargement de bagages.
